# DEMANDE DE BREVET EUROPEEN

(11) **EP 1 544 778 A1**
(43) Date de publication de la demande: **22.06.2005**
(21) Numéro de dépôt: 04293000.8
(22) Date de dépôt: 15.12.2004
(51) Int. Cl.: G06F 17/60

(54) **Procédé de mise en forme automatique d'un courrier électronique**

(30) Priorité: 16.12.2003 FR 0314736
(71) Demandeur: FRANCE TELECOM, 75015 Paris (FR)
(72) Inventeur: Clec'h, Armelle, 22730 Tregastel (FR); De Turenne, François, 22300 Lannion (FR); Aubertin, Laurent, 22700 Louannec (FR)
(74) Mandataire: Dossmann, Gérard

(57) **Abrégé**

Pour mettre en forme un courrier électronique, par rédaction automatique d'une partie dudit courrier, on synthétise ladite partie de courrier à partir d'informations relatives à l'émetteur du courrier qui sont extraites d'une base de données (22) et de données relatives au destinataire, et l'on insère la partie de courrier élaborée dans le corps du courrier.

## Description

L'invention concerne le domaine des messageries électroniques et se rapporte plus particulièrement à la mise en forme automatique de courriers électroniques.

Dans le but de faciliter l'élaboration de tels messages, certains outils de messagerie électronique permettent de créer une signature et d'insérer cette signature au message envoyé par un usager et ce, de manière automatique, lors de l'envoi du message.

Tel est en particulier le cas des services de messagerie sur le web qui proposent des services de rédaction de courriers électroniques selon lesquels un champ libre est mis à la disposition de l'utilisateur pour saisir un libellé qu'il souhaite insérer dans chacun des courriers, en tant que signature. Cette insertion peut s'effectuer automatiquement ou en réponse à une demande spécifique de la part de l'émetteur.

Cette technique présente un certain nombre d'inconvénients majeurs limitant de manière considérable sa convivialité. En effet, elle nécessite, de la part de l'émetteur, de saisir entièrement la signature qu'il souhaite insérer dans les messages. Ces services ne permettent également pas de disposer de différentes signatures contenant les mêmes informations mais dont la présentation est formatée en fonction du destinataire. Enfin, dans le cas où l'une des informations personnelles de l'utilisateur qui apparaît dans sa signature n'est plus valide, il doit, lui-même, modifier sa signature même si les modifications ont déjà été transmises au service web.

Le but de l'invention est de pallier ces inconvénients et de fournir un service de mise en forme automatique d'un courrier électronique permettant d'automatiser davantage la rédaction automatique d'une partie du courrier.

L'invention a donc pour objet un procédé de mise en forme automatique d'un courrier électronique par rédaction automatique d'une partie dudit courrier, comprenant les étapes consistant à récupérer des informations relatives à l'émetteur du courrier à partir d'une base de données centralisée, à synthétiser ladite partie de courrier à partir des informations récupérées et de données relatives au destinataire du courrier électronique et à insérer la partie de courrier élaborée dans le corps du courrier.

Comme on le conçoit, la portion insérée automatiquement dans le courrier étant élaborée à partir d'informations centralisées, il n'est pas nécessaire de procéder à une nouvelle saisie de données déjà connues par le service de messagerie. En outre, la mise à jour d'une signature d'un courrier est automatique, dans la mesure où il convient simplement de mettre à jour les données stockées dans la base de données. Enfin, il est possible, grâce à l'invention, d'adapter la partie automatiquement insérée dans chaque message au destinataire ou au contexte selon lequel le courrier est émis.

Avantageusement, le courrier électronique est émis au moyen d'un service de messagerie web et les informations sont récupérées par émission automatique d'une requête au format http transmise à la base de données.

Selon une caractéristique du procédé selon l'invention, la partie de message comprend une signature du courrier.

Dans ce cas, le procédé comprend une étape de création d'une signature par défaut à partir d'une partie au moins des données extraites de la base de données et une étape de création d'une signature personnalisée à partir de données sélectionnées parmi les données mémorisées dans la base de données, ladite partie de courrier étant élaborée à partir de l'une desdites signatures.

Selon une autre caractéristique de l'invention, la signature par défaut est élaborée à partir d'un premier ensemble prédéterminé de données extraites de la base de données et est mémorisée après élaboration.

En ce qui concerne la signature personnalisée, celle-ci est élaborée à partie d'un deuxième ensemble de données extraites de la base de données et sélectionnées par l'émetteur du courrier et d'un champ de données textuelles dont le contenu est optionnellement saisi par l'émetteur du courrier, et est mémorisée après élaboration.

Dans un mode de mise en oeuvre du procédé selon l'invention, après chaque modification de données dans la base de données, on modifie la ou les signatures mémorisées en fonction des modifications des données.

De préférence, le procédé comporte en outre une étape de formatage de la ou des signatures en fonction de la zone géographique dans laquelle est situé le destinataire du courrier électronique, qui est déterminée par analyse de l'adresse du destinataire.

Dans ce cas, l'étape de formatage peut comporter une étape d'insertion d'un préfixe ou d'un suffixe correspondant à la localisation de l'émetteur, à des données extraites de la base de données.

Selon une autre caractéristique de l'invention, le procédé comporte en outre une étape de détection d'une catégorie de contacts à laquelle appartient le destinataire du message et d'élaboration d'un gabarit à partir d'une liste de gabarits de messages stockés en mémoire en fonction des catégories de contacts.

Avantageusement, les données extraites de la base de données pour l'élaboration de ladite partie de message comprennent au moins une donnée choisie parmi le nom, l'adresse postale, l'adresse électronique et le numéro de téléphone mobile personnel de l'émetteur du courrier.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est un schéma synoptique illustrant une architecture réseau pour la mise en oeuvre d'un procédé conforme à l'invention ;
- la figure 2 est un organigramme illustrant les principales phases du procédé selon l'invention ; et
- la figure 3 est un organigramme détaillant un exemple de mise en oeuvre d'un procédé selon l'invention pour l'insertion d'une signature formatée.

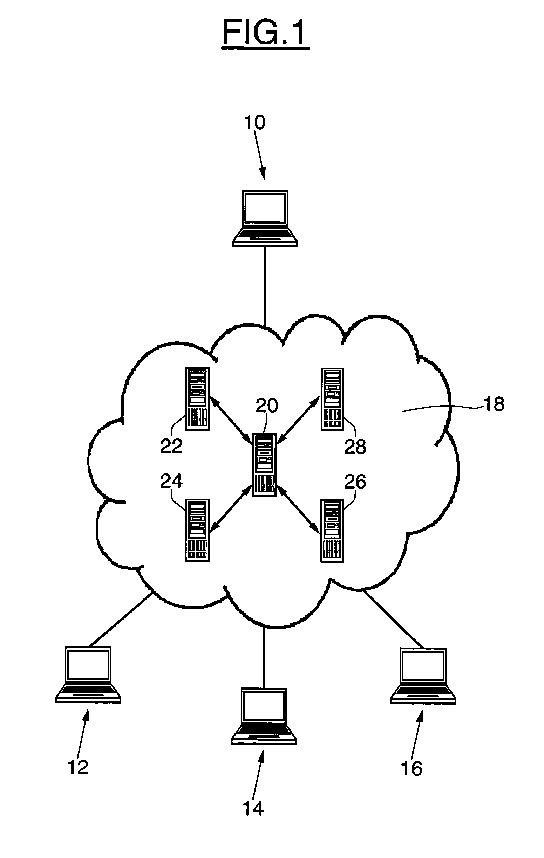

Sur la figure 1, on a représenté une architecturé réseau mettant en oeuvre un service de messagerie électronique. L'architecture réseau représentée sur cette figure est destinée à fournir un service de messagerie de type web entre un ensemble de terminaux d'utilisateurs distants tels que 10, 12, 14 et 16 connectés au réseau internet 18.

Un serveur centralisé 20 se charge de procéder à la transmission de courriers électronique élaborés à partir de l'un des terminaux et de le retransmettre ou le diffuser vers le ou les terminaux distants destinataires. Des serveurs complémentaires 22, 24, 26 et 28 communiquent avec le serveur central 20 pour fournir des services additionnels liés au service de messagerie tels qu'un service de carnet d'adresses, de répertoire, de rédaction de courriers, ...

Les serveurs communiquent entre eux par l'intermédiaire de requêtes http, éventuellement relayés par le serveur de messagerie centralisé 20.

Comme on le conçoit, une telle architecture permet de stocker de manière centralisée l'ensemble des données et informations nécessaires à la mise en oeuvre de ces services. Tel est en particulier le cas des données relatives aux carnets d'adresses qui sont centralisées dans le serveur concerné.

Comme indiqué précédemment, ces serveurs permettent de proposer à chaque utilisateur des services liés à la messagerie. De tels services peuvent être de diverses natures.

Conformément à une caractéristique de l'invention, l'un des serveurs, tel que le serveur désigné par la référence numérique générale 22, est utilisé pour proposer à l'utilisateur un service d'aide à la rédaction de messages par rédaction automatique d'une partie des courriers à transmettre. Cette partie peut, par exemple, concerner l'insertion d'une signature. Cependant, comme cela sera mentionné par la suite, ce service peut également permettre de procéder à une rédaction automatique d'une partie initiale ou d'une partie finale d'un courrier électronique, en fonction du destinataire et, en particulier, de la catégorie à laquelle appartient le destinataire parmi un ensemble de catégories prédéfinies par l'émetteur, ou en fonction du contexte dans lequel est élaboré le message. L'assistance à la rédaction peut également consister en une fourniture d'un gabarit prédéterminé de message, ou encore en l'activation de fonction de messagerie.

En ce qui concerne l'insertion d'une signature, le serveur 22 permet, par exemple, d'insérer à la fin d'un message une signature contenant une ou plusieurs données choisies parmi le nom, l'adresse postale, l'adresse électronique et le numéro de téléphone personnel fixe ou mobile de l'émetteur du courrier. En outre, ces informations peuvent être formatées en fonction de la zone géographique dans laquelle se situe le destinataire. Ainsi, par exemple, dans le cas où le destinataire se situe à l'étranger, la signature peut être formatée automatiquement en ajoutant un préfixe approprié au numéro de téléphone de l'émetteur, en ajoutant le pays dans lequel se situe l'émetteur, ou en l'adaptant aux règles de présentation généralement utilisées dans le pays destinataire, ...

Il est également possible de prévoir une création d'une signature par défaut qui est destinée à être utilisée en l'absence d'instructions spécifiques, ou, au contraire, d'une ou plusieurs signatures personnalisées que l'émetteur souhaite utiliser dans des cas spécifiques.

En ce qui concerne la portion de message destinée à être insérée en en-tête ou à la fin du message, cette portion de message peut être constituée par des formules de politesse, insérées automatiquement dans le message. Avantageusement, ces formules sont insérées en fonction du destinataire, de son activité, ou, de manière générale, du contexte dans lequel le message est émis.

Par exemple, dans le cas où le message est émis dans le cadre d'une activité privée, les formules de politesse insérées sont plus familières que celles utilisées dans le cadre d'une activité professionnelle. La langue de ces parties de message en fonction du destinataire est, le cas échéant, également choisie en fonction de celle du destinataire.

Afin de fournir ces services, le serveur 22 est associé à une base de données dans laquelle sont stockées l'ensemble des informations nécessaires à l'élaboration de la signature et des portions de message évoquées ci-dessus. Ces informations sont préalablement téléchargées par l'utilisateur et modifiables à la demande. Ces données peuvent donc être de diverse nature et concernent, notamment, le nom, le prénom, l'adresse électronique, l'adresse professionnelle, l'adresse personnelle, le numéro de téléphone fixe, le numéro de téléphone mobile, la fonction professionnelle, le grade de chaque utilisateur, ...

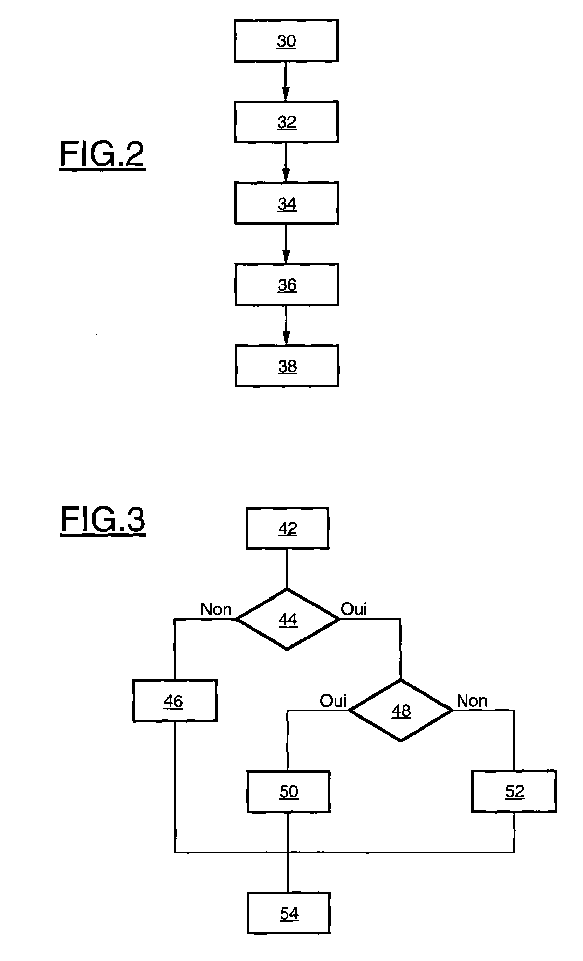

En se référant également à la figure 2, pour procéder à l'élaboration de la signature, après enregistrement des données dans la base de données (étape 30), le serveur 22 procède (étape 32) à l'élaboration de la signature à partir d'une partie ou de la totalité des données mémorisées, en fonction des choix de l'utilisateur. Comme indiqué précédemment, au cours de cette étape 32, il est procédé à l'élaboration d'une signature par défaut et, de manière optionnelle, à l'élaboration d'une signature personnalisée. La signature par défaut est destinée à être insérée dans chaque message à moins qu'une requête tendant à l'insertion d'une signature personnalisée n'ait été émise par l'utilisateur. La signature par défaut est élaborée à partir d'une partie ou de l'ensemble des données mémorisées dans la base de données et se présente sous la forme d'un fichier texte destiné à être inséré en fin de message.

La signature personnalisée est élaborée à partir d'un deuxième ensemble de données sélectionnées par l'utilisateur, différentes de celle utilisées pour l'élaboration de la signature par défaut, et se présente également sous la forme d'un fichier texte destiné à être insérée en fin de message, en réponse à une demande spécifique de l'utilisateur. Après avoir été élaborées, ces signatures sont mémorisées par le serveur 22 (étape 34).

Après cette phase de configuration préalable, le serveur 22 provoque automatiquement l'insertion de la signature choisie par l'utilisateur dans le message (étape 36). Le message peut alors être envoyé (étape 38).

On notera que lors de l'étape 32 de configuration préalable au cours de laquelle la signature par défaut et la signature personnalisée sont élaborées, l'utilisateur peut également transmettre une requête tendant à l'élaboration d'une signature formatée pour une zone géographique, c'est-à-dire une signature destinée à être utilisée pour l'ensemble des courriers destinés à cette zone géographique. Dans ce cas, le serveur 22 provoque la modification des informations présentées dans la signature de sorte qu'elles soient utilisables directement par l'ensemble des destinataires situés dans la zone géographique définie par l'utilisateur. Il peut, par exemple, s'agir d'adapter le numéro de téléphone de l'émetteur en ajoutant le préfixe (33) au numéro qui figure dans la signature par défaut ou dans la signature personnalisée, l'adresse postale, restant, quant à elle, inchangée.

On va maintenant décrire, en référence à la figure 3, une procédure permettant d'insérer automatiquement une signature en fonction du destinataire d'un message.

Cette procédure débute par une première étape 42, mise en oeuvre lors de l'envoi d'un message préalablement élaboré, au cours de laquelle le serveur 22 analyse le message et, en particulier, l'adresse du destinataire pour déterminer la zone géographique dans laquelle ce dernier se situe. Cette analyse peut s'effectuer soit par analyse de l'adresse postale du destinataire, si elle est connue, ou par le suffixe de l'adresse e-mail.

Si, lors de l'étape 44 suivante, il est déterminé que le destinataire se situe dans le même territoire de l'Etat dans lequel se situe l'émetteur, il est procédé, lors de l'étape 46 suivante, à l'insertion de la signature par défaut ou de la signature personnalisée, au choix de l'utilisateur.

Au contraire, si lors de cette étape 44 il a été déterminé que le destinataire se situe à l'étranger, lors de l'étape 48 suivante, le serveur 42 scrute les signatures mémorisées de manière à détecter s'il existe une signature formatée pour le territoire de l'Etat dans lequel se situe le destinataire.

Si tel est le cas, cette signature formatée est utilisée et est insérée dans le message (étape 50). Dans le cas contraire, il est procédé à un formatage automatique de la signature par défaut ou de la signature personnalisée pour le territoire concerné, par exemple en ajoutant le préfixe (33) à la signature (étape 52). Le message peut alors être transmis à son destinataire (étape 54). Bien entendu, dans le cas ou un message doit être diffusé à plusieurs destinataires se situant dans des états différents, le serveur 22 se charge d'adapter la signature aux messages destinés à chaque destinataire, selon la méthode décrite ci-dessus.

Le procédé qui vient d'être décrit permet également d'insérer automatiquement des portions de messages en en-tête ou en fin d'un courrier électronique à émettre sous la forme d'un gabarit de message proposé à l'utilisateur. A cet effet, lequel les contacts de l'émetteur mémorisés dans le serveur de carnet d'adresses sont regroupés sous la forme de catégories de contacts. Ces catégories peuvent, par exemple, correspondre à des activités de l'émetteur, à savoir des activités professionnelles ou liées à ses loisirs. A chaque catégorie est associé un gabarit de message comprenant des formules de politesse adaptées au destinataire. Ainsi, à partir d'une l'analyse de l'adresse électronique du destinataire, le serveur 22 récupère le gabarit correspondant au destinataire et procède automatiquement à l'affichage de ce gabarit.

On notera que grâce à la procédure décrite ci-dessus, il est également possible de gérer la transmission du message en fonction de la catégorie du destinataire, en spécifiant certaines options de la messagerie. Ainsi, par exemple, les messages professionnels sont émis avec une importance plus haute que les messages personnels. Il peut également être prévu de demander une confirmation de lecture pour les messages envoyés à un contact professionnel. Il est également possible de prévoir, pour un message envoyé à un contact personnel, une transmission d'une copie du message à l'adresse électronique professionnelle du destinataire, en particulier dans le ces où il a été spécifié que l'importance du message est « haute ».

On notera enfin qu'une messagerie professionnelle présente généralement une capacité et une bande passante supérieures. Ainsi, si le message est envoyé à une adresse professionnelle, la signature peut comporter des informations supplémentaires, telles qu'un logo animé ou un fichier images, qui ne sera pas utilisé dans le cas d'une adresse personnelle.

## Revendications

1. Procédé de mise en forme automatique d'un courrier électronique par rédaction automatique d'une partie dudit courrier, **caractérisé en ce qu'**il comporte les étapes consistant à récupérer des informations relatives à l'émetteur du courrier qui sont extraites d'une base de données (22) centralisée, à synthétiser ladite partie de courrier à partir des informations récupérées et de données relatives au destinataire du courrier, et à insérer la partie de courrier él aborée dans le corps du courrier.

2. Procédé selon la revendication 1, **caractérisé en ce que** les informations sont récupérées par émission automatique d'une requête au format http transmise à la base de données.

3. Procédé selon l'une des revendications 1 et 2, **caractérisé en ce que** ladite partie de message comprend une signature dudit courrier.

4. Procédé selon la revendication 3, **caractérisé en ce qu'**il comporte une étape de création d'une signature par défaut à partir d'une partie au moins des données extraites de la base de données (22) et une étape de création d'une signature personnalisée à partir de données sélectionnées parmi les données mémorisées dans la base de données, ladite partie de courrier étant élaborée à partir de l'une desdites signatures.

5. Procédé selon la revendication 4, **caractérisée en ce que** la signature par défaut est élaborée à partir d'un premier ensemble prédéterminé de données extraites de la base de données et est mémorisée après élaboration.

6. Procédé selon la revendication 5, **caractérisé en ce que** la signature personnalisée est élaborée à partir d'un deuxième ensemble de données extraites de la base de données (22) et sélectionnées par l'émetteur du courrier et d'un champ de données textuelles dont le contenu est optionnellement saisi par l'émetteur du courrier, et est mémorisée après élaboration.

7. Procédé selon l'une des revendications 5 et 6, **caractérisé en ce qu'**après chaque modification de données dans la base de données, on modifie la ou les signatures mémorisées en fonction des modifications des données.

8. Procédé selon l'une quelconque des revendications 3 à 7, **caractérisé en ce qu'**il comporte en outre une étape de formatage de la ou des signatures en fonction de la zone géographique dans laquelle est situé le destinataire du courrier électronique, qui est déterminée par analyse de l'adresse du destinataire.

9. Procédé selon la revendication 8, **caractérisé en ce que** l'étape de formatage comprend l'insertion d'un préfixe ou d'un suffixe correspondant à la localisation de l'émetteur, à des données extraites de la base de données.

10. Procédé selon l'une quelconque des revendications 1 à 9, **caractérisé en ce qu'**il comporte en outre une étape de détection d'une catégorie de contacts à laquelle appartient le destinataire du message et d'élaboration d'un gabarit de message à partir d'une liste de gabarits de messages stockés en mémoire en fonction des catégories de contacts.

11. Procédé selon l'une quelconque des revendications 1 à 10, **caractérisé en ce que** les données extraites de la base de données pour l'élaboration de ladite partie de message comprennent au moins une donnée choisie parmi le nom, l'adresse postale, l'adresse électronique, et le numéro de téléphone mobile personnel de l'émetteur du courrier.
